Europäisches Patentamt

European Patent Office

Office européen des brevets

(19)

(11) Numéro de publication: **0 207 824**
**B1**

(12)

# FASCICULE DE BREVET EUROPEEN

(45) Date de publication du fascicule du brevet:
**24.05.89**

(21) Numéro de dépôt: **86401102.8**

(22) Date de dépôt: **26.05.86**

(51) Int. Cl.⁴: **F16C 1/28**

(54) **Dispositif flexible tubulaire de transmission d'efforts longitudinaux.**

(30) Priorité: **21.06.85 FR 8509452**

(43) Date de publication de la demande:
**07.01.87 Bulletin 87/2**

(45) Mention de la délivrance du brevet:
**24.05.89 Bulletin 89/21**

(84) Etats contractants désignés:
**DE**

(56) Documents cités:
**US-A- 3 154 966**
**US-A- 3 287 990**
**US-A- 4 133 222**

(73) Titulaire: **Richoux, Raymond, ISPE,
F-40600 Biscarrosse(FR)**

(72) Inventeur: **Richoux, Raymond, ISPE,
F-40600 Biscarrosse(FR)**

(74) Mandataire: **Loriot, Jacques et al, c/o SA.
FEDIT-LORIOT 38, avenue Hoche, F-75008 Paris(FR)**

ACTORUM AG

**Description**

La présente invention concerne les dispositifs flexibles tubulaires destinés à assurer la transmission d'efforts de traction et/ou de compression du type constitué par une enveloppe ou gaine tubulaire flexible, métallique ou plastique, à section circulaire, dans l'axe de laquelle est disposée une lame centrale plate souple, généralement en acier inoxydable à haute résistance, destinée à transmettre les efforts dans son mouvement axial par rapport à ladite enveloppe fixe, entre deux rangées de billes, qui se déplacent guidées dans les chemins de roulement, creusés de part et d'autre dans ladite lame.

Les billes, roulant contre la lame, sont maintenues à écartement fixe par une cage à billes, généralement constituées par une bande méplate percée d'orifices de réception des billes.

Dans un mode de réalisation connu (tel que celui décrit dans le brevet français No. 1 124 613 déposé le 8 avril 1955 au nom du même inventeur), les deux rangées de billes se déplacent, d'une part, dans les chemins de roulement creusés sur les deux faces de la lame centrale et, d'autre part, dans ceux de deux rails flexibles fixes opposés, appliqués contre la face interne circulaire de ladite gaine, également de forme aplatie et généralement faits en acier inoxydable.

Dans les transmissions connues de ce genre, les deux extrémités de chaque rail sont accrochées à embouts fixés au bâti de la machine sur laquelle est montée la transmission, tandis que les deux extrémités de la lame centrale sont respectivement solidaires de deux tiges coulissantes montées dans l'axe desdits embouts et attelées respectivement aux organes de commande ou à commander.

L'ensemble de la transmission, faite de profils plats peut prendre une configuration courbe ou sinueuse, grâce à la possibilité qu'ont les attaches des rails et de la lame centrale de s'orienter en tournant autour de l'axe des embouts d'extrémité, de façon à mettre le plan contenant les deux rangées de billes dans le plan de la courbe de la gaine flexible, comme cela a été décrit dans le brevet français numéro 1 212 730 déposé le 25 mars 1958 au nom du même inventeur.

Suivant ce brevet, l'organe d'accrochage des rails est constitué par un manchon, rotatif à l'intérieur de l'embout, qui est composé de deux demi-coquilles dont le plan de joint est un plan diamétral passant par le plan médian de la lame centrale, chaque demi-coquille étant intercalée entre l'un des rails et la face correspondante de la lame centrale. Chaque demi-coquille comporte deux ou trois tétons en saillie qui s'accrochent dans des orifices percés dans le rail.

Cette disposition connue du manchon d'accrochage impose de prévoir un écartement appréciable entre les deux rails et, par conséquent, un diamètre intérieur relativement important pour la gaine.

On doit citer également le document US-A 3 154 966 dans lequel l'organe d'accrochage des rails est constitué par un manchon tubulaire formé par deux tronçons opposés demi-tubulaires d'un diamètre intérieur Ø₂ égal au diamètre intérieur Ø₁ de la gaine.

Selon ce document, des dents d'accrochage des rails, s'étendant radialement vers l'intérieur, sont prévues sur chaque tronçon demi-tubulaire et des crans, ou orifices, dans lesquels s'engagent lesdites dents, sont ménagés dans chaque rail. Les caractéristiques connues de ce document US-A 3 154 966 sont indiquées dans le préambule de la revendication 1.

Le dispositif décrit dans ce document antérieur présente l'inconvénient que les dents d'accrochage des rails, qui font saillie radialement vers l'intérieur empêchent la libre circulation des billes et des cages à billes à l'intérieur des embouts, ce qui réduit la course utile de la lame centrale et laisse une longueur appréciable des rails et de la lame centrale sans le soutien des billes. Il en résulte un risque de flambage en compression de l'un ou l'autre de ces organes.

L'invention a pour but de permettre, grâce à une disposition nouvelle des manchons d'accrochage, de prolonger la course des billes et des cages à billes à travers les embouts, ce qui, notamment, élimine le risque de flambage en compression des rails ou de la lame, même sur une grande course. Au surplus, la longueur des embouts d'extrémité peut être réduite, ce qui facilite le montage de ces embouts sur les bâtis fixes.

La présente invention permet également un rapprochement maximal des rails et, par conséquent, une réduction du diamètre de la gaine. Ceci procure une flexibilité accrue de la transmission, un encombrement et un poids réduit, une réduction de la différence de longueur des rails lorsque la transmission est recourbée.

Comme on le verra dans ce qui suit, l'invention s'applique également aux dispositifs flexibles de transmission dits "Monorail", dans lesquels les billes de l'une des rangées de billes roulent dans le chemin de roulement d'un rail unique, tandis que les billes de l'autre rangée de billes roulent directement sur la surface interne lisse de la gaine. Un tel dispositif de transmission à rail unique a été décrit dans la demande de brevet français No. 8 419 126 déposée le 14 décembre 1984 au nom du même inventeur et publiée sous FR-A 2 574 878 le 20 juin 1986.

L'invention a pour objet un dispositif flexible tubulaire de transmission d'efforts longitudinaux qui comprend: une gaine tubulaire flexible à section circulaire; une lame centrale souple disposée à l'intérieur de la gaine; une première rangée de billes roulant dans un premier chemin de roulement creusé sur une première face de la lame centrale; une deuxième rangée de billes roulant dans un deuxième chemin de roulement creusé sur la deuxième face, opposée à la première, de la lame centrale; ainsi qu'une première et une deuxième cages à billes retenant les billes; au moins un rail métallique présentant une gorge de roulement pour les billes de l'une des rangées de billes, ledit rail étant appliqué contre la surface interne de la gaine; un embout tubulaire fixé à chaque extrémité de la gaine; un organe d'accrochage du rail monté rotatif à l'intérieur dudit embout et calé axialement dans ledit embout, ledit organe d'accrochage du rail étant constitué par un manchon tubulaire, formé par deux tronçons opposés demi-tubulaires, d'un diamètre intérieur $\emptyset_2$ égal au diamètre intérieur $\emptyset_1$ de la gaine; des dents d'accrochage, s'étendant radialement vers l'intérieur, étant prévues sur chaque tronçon demi-tubulaire; et des crans, dans lesquels s'engagent lesdites dents, étant ménagés dans chaque rail, ledit dispositif étant caractérisé en ce que: le plan de jonction P' des deux tronçons demi-tubulaires est perpendiculaire au plan médian P de la lame centrale; en ce que les dents d'accrochage sont des dents rabattues formées dans les bords en regard des tronçons demi-tubulaires; et en ce que les crans, dans lesquels s'engagent les dents sont ménagés de chaque côté du rail, pour accrocher ce dernier au manchon, l'intervalle subsistant entre lesdites dents rabattues du manchon et la lame centrale étant suffisant pour laisser libre passage aux cages à billes à l'intérieur du manchon.

L'invention sera mieux comprise à la lecture de la description détaillée qui va suivre et à l'examen des dessins annexés qui représentent, à titre d'exemples non limitatifs, plusieurs modes de réalisation de l'invention.

La figure 1 représente schématiquement l'ensemble d'un dispositif de transmission à billes auquel s'applique l'invention.

La figure 2 est une vue en coupe transversale du dispositif, à plus grande échelle, au niveau des embouts, dans le cas où celui-ci comporte deux rails de roulement des billes.

La figure 3 est une vue en coupe transversale suivant le plan III-III de la figure 1.

La figure 4 est une vue partielle en coupe longitudinale du dispostif de la figure 2 montrant l'embout et le manchon rotatif d'accrochage des deux rails.

Les figures 5 et 6 représentent respectivement l'accrochage d'une première et d'une deuxième extrémités des rails dans les manchons d'accrochage.

La figure 7 est une vue analogue à la figure 2 mais dans le cas d'un dispositif ne comportant qu'un seul rail de guidage des billes.

La figure 8 est une vue partielle en coupe longitudinale du dispositif de la figure 7, montrant l'embout et le manchon rotatif d'accrochage du rail unique.

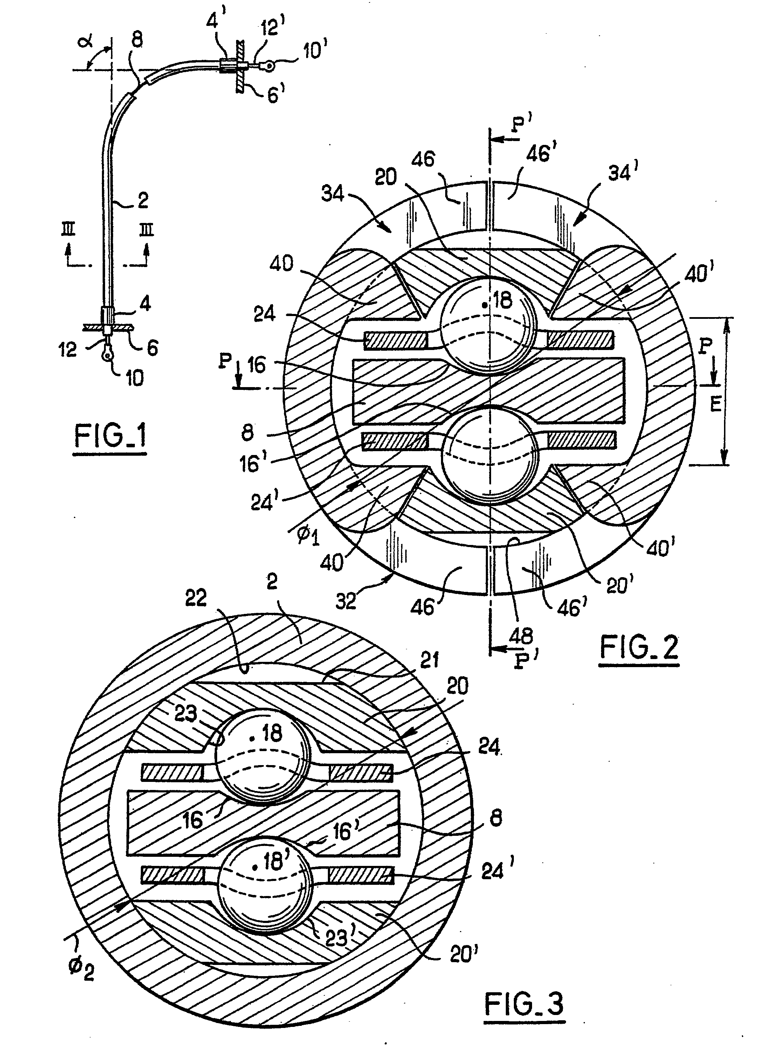

Le dispositif représenté sur la figure 1 comprend: une gaine tubulaire 2, deux embouts d'extrémité 4, 4' enserrant la gaine et assurant sa fixation sur deux parties 6, 6' du bâti de la machine, une lame centrale 8 guidée par deux jeux de billes (non représentés sur la figure 1), et deux organes d'actionnement 10, 10' (moteur ou récepteur) fixés aux extrémités de la lame centrale 8 par deux tiges cylindriques 12, 12' coulissant dans l'axe des embouts d'extrémités et pouvant pivoter dans ces embouts.

L'âme centrale 8 est une lame plate souple, en acier inoxydable à haute résistance, creusée sur chacune de ses faces d'un chemin de roulement 16, 16' pour les deux rangées de billes 18, 18' (figures 2 et 3).

Les billes 18 de la première rangée de billes roulent sur un rail flexible fixe 20 appliqué contre la face interne circulaire 22 de la gaine 2, ce rail, également en acier inoxydable, ayant une forme aplatie comme représenté sur la figure 3 (avec un méplat 21 dans la partie en arc-de-cercle s'appliquant contre la gaine) et présentant une gorge 23 de roulement des billes 18.

Entre les faces en regard de la lame centrale 8 et du rail 20, une cage à billes 24 maintient l'écartement des billes 18.

Les billes 18' de la deuxième rangée de billes 18' roulent dans les gorges 16' et 23' de la lame centrale 8 et du deuxième rail 20', l'écartement des billes 18' étant maintenu par une deuxième cage à billes 24' logé entre la deuxième face de la lame centrale 8 et la surface interne de la gaine.

Les deux extrémités des deux rails 20, 20' sont respectivement accrochées dans un manchon, calé axialement à l'intérieur des embouts 4, 4', et pouvant tourner dans ces embouts de façon que l'ensemble de la transmission, faite de profils plats puisse prendre une configuration courbe ou sinueuse, grâce à la possibilité qu'ont les attaches des rails et de la lame centrale de s'orienter en tournant autour de l'axe des embouts d'extrémité, de façon à mettre le plan contenant les deux rangées de billes 18, 18' dans le plan de la courbe de la gaine flexible.

Le manchon d'accrochage pour l'une des extrémités des rails 20, 20' sera décrit en détail dans ce qui suit à propos des figures 2, 4, 5 et 6.

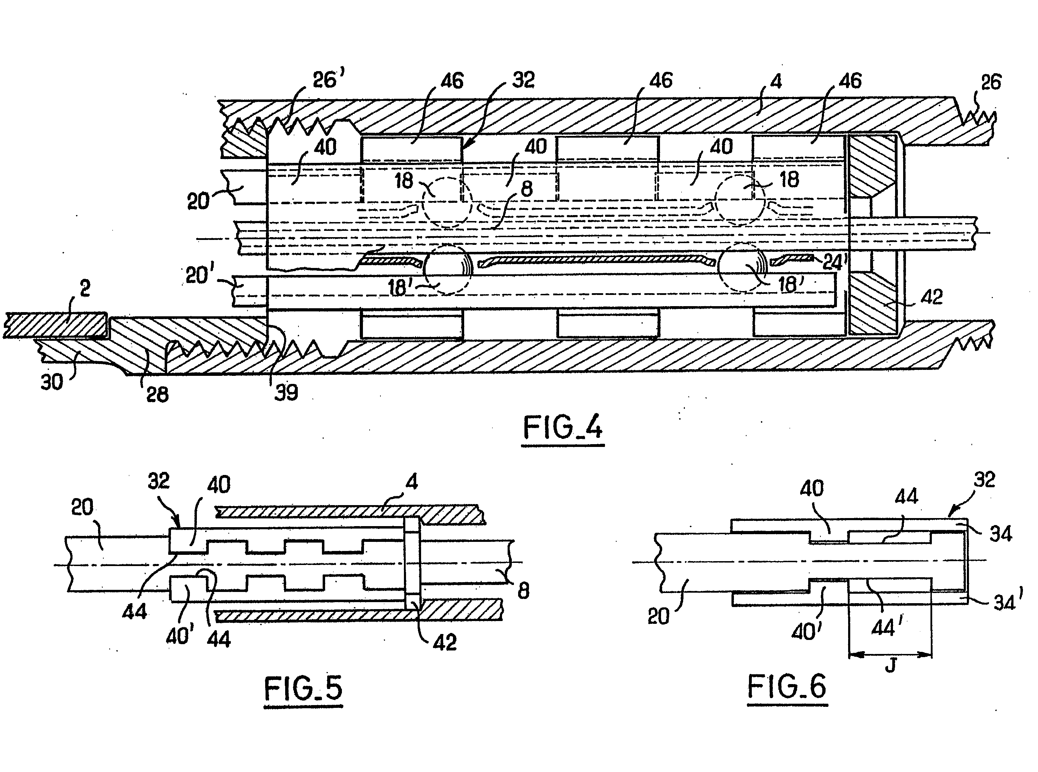

On a représenté sur la figure 4 un embout tubulaire 4 dont l'extrémité filetée 26 permet de fixer l'embout dans le bâti fixe 6 de la machine (figure 1) et dont l'autre extrémité filetée 26' reçoit un bouchon d'embout 28 comportant une jupe 30 qui enserre l'extrémité de la gaine flexible 2. On a représenté également la lame centrale 8, les rails 20, 20', les deux jeux de billes 18, 18' et les deux cages à billes 24, 24'.

Les deux rails 20, 20' sont retenus par un manchon tubulaire d'accrochage 32, lequel est maintenu axialement dans l'embout 4 par appui contre l'extrémité 39 du bouchon d'embout 28 et, à son autre extrémité par une bague 42 enfilée dans l'embout.

Le manchon 32 est ainsi libre de tourner à l'intérieur de l'embout 4, avec les rails 20, 20' qui y sont accrochés.

Le manchon tubulaire 32 est constitué par deux tronçons opposés demi-tubulaires 34, 34' (voir figure 2) d'un diamètre intérieur $\emptyset_1$ égal au diamètre intérieur $\emptyset_2$ de la gaine 2 (voir figure 3).

Les deux tronçons demi-tubulaires opposés 34, 34' sont accolés suivant un plan de jonction P' qui est perpendiculaire au plan médian P de la lame centrale (et qui est la plan de la figure 4).

Dans les bords en regard des tronçons demi-tubulaires 34, 34' sont ménagées des dents dont une sur deux est rabattue vers le centre du manchon.

Chaque dent rabattue 40, 40' (voir figures 2 et 5) s'engage dans des encoches ou crans correspondants 44 taillés latéralement, de chaque côté des extrémités des rails 20, 20', pour accrocher ces rails au manchon 32. On peut prévoir par exemple, comme il est représenté sur les figures 4 et 5, trois dents rabattues 40, 40' sur chaque bord des tronçons demi-tubulaires, ces dents rabattues pouvant avoir par exemple 4 à 6 mm de longueur.

Entre les dents rabattues 40, 40' subsistent des portions non rabattues 46, 46' des tronçons demi-tubulaires 34, 34', ces portions étant accolées les unes contre les autres suivant le plan de jonction P' précité et supportant, par leurs faces internes cyclindriques 48 (de même diamètre que le diamètre intérieur de la gaine 2), les rails 20, 20', comme on le voit sur la figure 2.

Les dents rabattues 40, 40' laissant subsister entre elles et la face en regard de la lame centrale 8 un espace suffisant pour laisser libre passage aux cages à billes 24, 24'.

Il apparaît bien que les manchons d'accrochage 32 ne présentent aucun obstacle délimitant la libre circulation des billes 18, 18' et des cages 24, 24' dans les manchons 32 et, par conséquent, dans les embouts d'extrémité 4. Ceci présente de grands avantages.

En effet, dans les transmissions à billes, le déplacement des billes est égal à la moitié de celui de la lame centrale. Si les manchons d'accrochage des rails limitent en fin de course le déplacement des cages à billes, les profilés plats de la lame centrale et des rails, à la fin de course inverse, ne sont plus entretoisés par les billes, au minimum sur une demi-course à laquelle s'ajoute une garde de sécurité, d'environ 20 mm dans la pratique.

D'autre part, les manchons d'accrochage des rails connus, tels que ceux décrits dans le brevet précité No. 1 212 730, sont intercalés entre la lame centrale et les rails, ce qui crée un écartement nécessairement important entre ces éléments flexibles qui ne peuvent résister au flambage, sur la longueur indiquée ci-dessus de la demi-course, plus la garde, en cas d'effort important à transmettre.

Enfin, avec les manchons d'accrochage connus, la partie de la gaine flexible 2 qui est démunie du soutien des billes risque de plier si on impose une courbure de faible rayon au flexible. En conséquence, avec ces manchons d'accrochage connus, on devait prolonger la jupe 30 du bouchon d'embout 28 au moins jusqu'à la dernière bille.

Au contraire, le manchon 32 suivant l'invention accroche les rails 20, 20' latéralement, sans aucun élément d'accrochage intercalé entre la lame centrale 8 et les rails 20, 20'. L'écartement E entre les rails 20, 20' (voir figure 2) peut être ainsi réduit au minimum possible permettant le passage des cages 24, 24'. On obtient ainsi : une réduction du diamètre de la gaine (par exemple 8 mm de diamètre intérieur, au lieu de 9,5 sur les transmissions connues) et des embouts ; une amélioration de la souplesse du flexible; un gain de poids et d'encombrement sur la transmission.

Enfin le rapprochement entre les rails 20, 20' réduit leur différence de longueur aux attaches, due aux changements de direction des embouts d'extrémité de la transmission (voir l'angle α sur la figure 1).

En effet, on devait prévoir jusqu'à présent, à cause de l'écartement relativement important des rails, un jeu longitudinal important entre rail et manchon d'accrochage pour deux des quatre extrémités des rails.

La différence de longueur entre les rails, due aux courbures, étant plus faibles grâce à l'invention, on peut prévoir seulement ce jeu longitudinal J sur une seule des quatre extrémités des deux rails, comme cela est représenté sur la figure 6. Dans ce cas, chacun des tronçons demi-tubulaires 34, 34' peut ne comporter qu'une seule dent rabattue 40, 40', l'encoche 44, 44' creusée latéralement de chaque côté du rail 20 ayant une extension suffisante pour permettre le jeu J du rail dans le manchon. Les trois autres extrémités des rails étant accrochées positivement dans les manchons, on obtient une meilleure répartition des charges que par le passé.

La pénétration des billes et des cages à l'intérieur des manchons, que est réalisée grâce à l'invention, permet de réduire de façon importante la longueur de la partie sans billes, hors des manchons d'accrochage. On supprime ainsi toutes les possibilités de flambage ou de déformation d'un rail ou de la lame centrale, même dans le cas d'une grande course de la lame. En conséquence, il est possible de transmettre des efforts nettement plus importants, en traction et en compression. Enfin la longueur des embouts d'extrémité 4 et des jupes 30 peut être notablement réduite, sans risque de pliure de la gaine à la sortie des embouts.

On a décrit dans ce qui précède le système d'accrochage des rails dans les manchons pour une transmission comportant, de façon classique, deux rails 20, 20'.

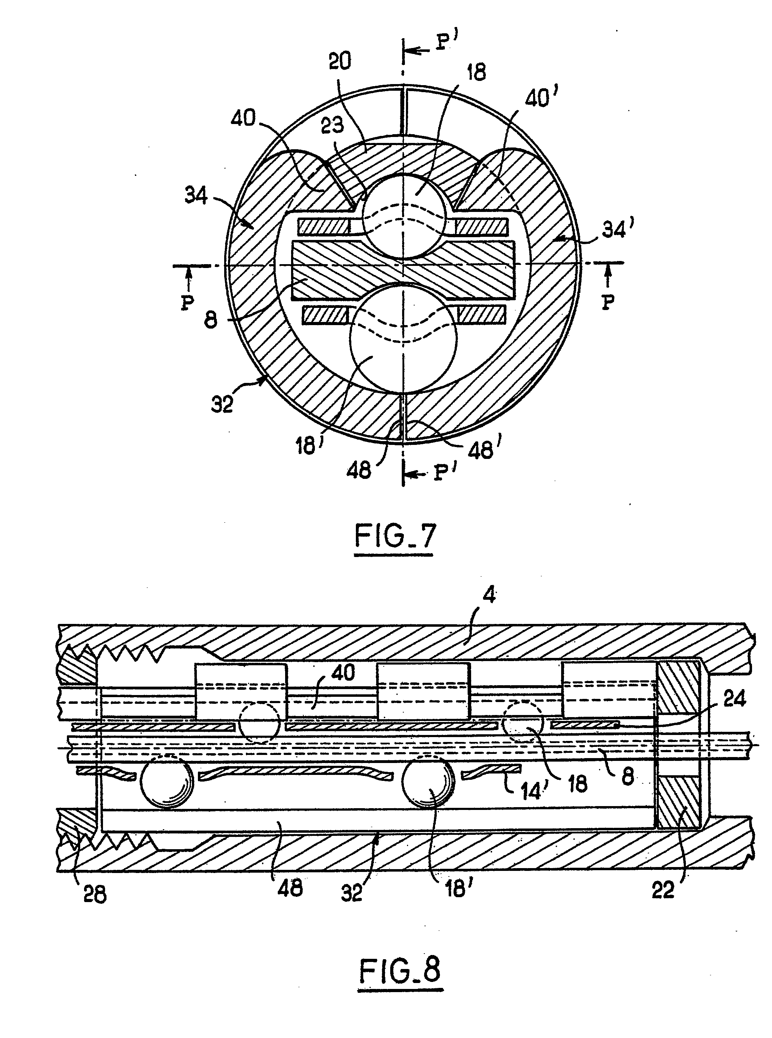

Mais l'invention s'applique également, comme il est représenté sur les figures 7 et 8, aux transmissions flexibles comportant un rail unique 20 dans lequel roulent les billes 18 du premier jeu de billes, tandis que les billes 18' du deuxième jeu de billes roulent directement sur la surface interne lisse de la gaine. Ce type de transmission, dit "Monorail" permet de réduire le diamètre de la transmission.

Dans ce cas, le manchon d'accrochage 32 du rail unique 20 est encore constitué de deux tronçons demi-tubulaires 34, 34' qui sont accolés suivant un plan P' perpendiculaire au plan médian P de la lame centrale 8. Chaque tronçon tubulaire 34, 34' est pourvu de dents rabattues 40, 40' seulement sur un de ses bords, pour l'accrochage du rail unique 20, tandis que les deux autres bords 48, 48' sont des bords lisses, dépourvus de dents, qui s'appliquent l'un contre l'autre suivant le plan P'. Bien entendu le manchon 32 est librement rotatif dans l'embout 4.

Comme on le voit sur la figure 8, ce système d'accrochage du rail 20 permet la pénétration à l'intérieur du manchon 32 des billes 18, 18' et des cages 24, 24'. Dans le manchon 32, les billes 18' roulent directement sur la surface interne du manchon qui est de même diamètre que la gaine. Là encore, l'accrochage du rail 20 se faisant latéralement, et non pas par un organe d'accrochage intercalé entre la lame centrale 8 et le rail 20, il est possible de réduire au minimum l'écartement entre rail et lame, donc de réduire le diamètre de la gaine (par exemple un diamètre intérieur de gaine de 6 mm peut être choisi au lieu de 8mm comme dans l'exemple précédent à deux rails.

Bien entendu, tous les avantages qui ont été décrits à propos de la transmission à deux rails se retrouvent dans le cas d'application à la transmission monorail sauf qu'il n'y a pas à tenir compte d'une différence de longueur de rails due à la courbure de la transmission (puisqu'il n'y a qu'un seul rail). Il en résulte que, dans ce cas, les deux extrémités du rail unique peuvent être ancrées, sans jeu longitudinal, dans les manchons par coopération positive des dents rabattues 40, 40' avec les crans latéraux du rail.

Une telle transmission peut être fabriquée a priori sans connaître les conditions de montage, puisqu'il n'y a pas à prévoir de jeu $J$ (entre rail et manchon) dépendant de l'angle $\alpha$ de courbure de la transmission.

## Revendications

1. Dispositif flexible tubulaire de transmission d'efforts longitudinaux qui comprend: une gaine tubulaire flexible à section circulaire; une lame centrale plate souple disposée à l'intérieur de la gaine; une première rangée de billes (18) roulant dans un premier chemin de roulement (16) creusé sur une première face de la lame centrale; une deuxième rangée de billes (18') roulant dans un deuxième chemin de roulement (16') creusé sur la deuxième face, opposée à la première, de la lame centrale; ainsi qu'une première et une deuxième cages à billes (24, 24') retenant les billes (18, 18'); au moins un rail métallique (20) présentant une gorge (23) de roulement pour les billes (18) de l'une des rangées de billes, ledit rail (20) étant appliqué contre la surface interne (22) de la gaine (2); un embout tubulaire (4, 4') fixé à chaque extrémité de la gaine (2); un organe d'accrochage du rail monté rotatif à l'intérieur dudit embout et calé axialement dans ledit embout, ledit organe d'accrochage du rail étant constitué par un manchon tubulaire (32), formé par deux tronçons opposés demi-tubulaires (34, 34'), d'un diamètre intérieur $\varnothing_2$ égal au diamètre intérieur $\varnothing_1$ de la gaine; des dents d'accrochage, s'étendant radialement vers l'intérieur, étant prévues sur chaque tronçon demi-tubulaire; et des crans, dans lesquels s'engagent lesdites dents, étant ménagés dans chaque rail, ledit dispositif étant caractérisé en ce que: le plan de jonction P' des deux tronçons demi-tubulaires (34, 34') est perpendiculaire au plan médian P de la lame centrale (8), en ce que les dents d'accrochage sont des dents rabattues (40, 40') formées dans les bords en regard des tronçons demi-tubulaires; et en ce que les crans (44), dans lesquels s'engagent les dents (40–40') sont ménagés de chaque côté du rail (20, 20'), pour accrocher ce dernier au manchon, l'intervalle subsistant entre lesdites dents rabattues du manchon et la lame centrale étant suffisant pour laisser libre passage aux cages à billes à l'intérieur du manchon.

2. Dispositif suivant la revendication 1, caractérisé en ce qu'il comprend deux rails métalliques (20, 20'), les billes (18') de la deuxième rangée de billes roulant dans une gorge de roulement (23') qui est creusée dans le deuxième rail (20'), ce dernier étant appliqué également contre la surface interne (22) de la gaine (2); en ce que chaque tronçon demi-tubulaire (34, 34') est pourvu sur ses deux bords de dents rabattues (40, 40') pour l'accrochage des deux rails (20, 20') dans le même manchon (32); et en ce que l'intervalle subsistant entre lesdites dents rabattues et la lame centrale est suffisant, sur les deux faces de ladite lame centrale, pour laisser libre passage aux deux cages à billes à l'intérieur du manchon.

3. Dispositif suivant la revendication 2, caractérisé en ce que, à l'une des deux extrémités de l'un des deux rails, un jeu longitudinal est prévu dans l'accrochage entre les dents rabattues du manchon et les crans dudit rail, l'ancrage des trois autres extrémités des rails dans les manchons étant fait sans jeu longitudinal.

4. Dispositif suivant la revendication 1, caractérisé en ce qu'il comprend: un rail métallique unique (20) présentant une gorge (23) de roulement pour les billes (18) de la première seulement des rangées de billes; en ce que les billes (18') de la deuxième rangée de billes roulent directement sur la surface interne de ladite gaine (2), en ce que la gaine (2) présente une surface interne lisse propre à servir de chemin de roulement auxdites billes (18'); et en ce que chaque tronçon demi-tubulaire (34, 34') est pourvu seulement sur un de ses bords de dents rabattues (40, 40') d'accrochage du rail unique (20), l'autre bord étant lisse et s'appliquant sur le bord lisse opposé de l'autre tronçon demi-tubulaire.

## Claims

1. Tubular flexible device for the transmission of longitudinal forces comprising a flexible tubular duct having a circular section, a flexible, flat central plate located within the duct, a first row of balls (18) rolling in a first race (16) hollowed out of a first face of the central plate, a second row of balls (18') rolling in a second race (16') hollowed out of the second face, opposite to the first, of the central plate, as well as first and second ball cages (24, 24') holding the balls (18, 18'), at least one metal rail (20) having a rolling groove (23) for the balls (18) of one of the rows of balls, said rail (20) being applied to the inner surface (22) of duct (2), a tubular end (4, 4') fixed to each end of the duct (2), an attachment member for the rail mounted in rotary manner within said end and axially keyed in said end, said rail attachment member being constituted by a tubular sleeve (32), formed by two opposite semi-tubular sections (34, 34') having an internal diameter $\varnothing_2$ equal to the internal diameter $\varnothing_1$ of the duct, attachment teeth extending radially towards the inside being provided on each semi-tubular section, and notches, in which engage the said teeth, being provided in each rail, the device being characterized in that the junction plane P' of the two semi-tubular sections (34, 34') is perpendicular to the median plane P of the central plate (8), that the attachment teeth are flattened teeth (40, 40') formed in the facing edges of the semi-tubular sections and that the notches (44), in which engage the teeth (40, 40'), are provided on each side of the rail (20, 20') for attaching the latter to the sleeve, the gap left between said flattened teeth of the sleeve and the central plate being adequate to give free passage to the ball cages within the sleeve.

2. Device according to claim 1, characterized in that it comprises two metal rails (20, 20'), the balls (18') of the second row of balls rolling in a rolling groove (23') hollowed out of the second rail (20'), the latter also being applied to the inner surface (22) of duct (2), that each semi-tubular section (34, 34') is provided on its two edges with flattened teeth (40, 40') for the attachment of two rails (20, 20') in the same sleeve (32) and that the gap left between said flattened teeth and the central plate is adequate, on the two faces of said central plate, for giving free passage to the ball cages within the sleeve.

3. Device according to claim 2, characterized in that at one of the two ends of one of the two rails, a longitudinal clearance is provided in the attachment between the flattened teeth of the sleeve and the notches of said rail, the anchoring of the three other ends of the rails in the sleeves taking place without any longitudinal clearance.

4. Device according to claim 1, characterized in that it comprises a single metal rail (20) having a rolling groove (23) for the balls (18) of the first row of balls only, that balls (18') of the second row of balls roll directly on the inner surface of the duct (2), that the duct (2) has a smooth inner surface able to serve as a race for the balls (18') and that each semitubular section (34, 34') is provided on one of its edges only with flattened teeth (40, 40') for the attachment of the single rail (20), the other edge being smooth and applied to the opposite smooth edge of the other semi-tubular section.

## Patentansprüche

1. Flexible, rohrförmige Vorrichtung zur Übertragung von Längskräften, bestehend aus: einer flexiblen Rohrhülse mit kreisförmigen Querschnitt, einem im Inneren der Hülse angeordneten, biegsamen mittleren Flachband, einer ersten Kugelreihe (18), die in einer ersten Kugelbahn (16) in einer ersten Fläche des mittleren Flachbandes läuft; einer zweiten Kugelreihe (18'), die in einer zweiten Kugelbahn (16') in der zweiten, der ersten gegenüberliegenden, Seite des mittleren Flachbandes läuft, und einem ersten und einem zweiten Kugelkäfig (24, 24'), die die Kugeln (18, 18') aufnimmt, weiter mindestens eine Metallschiene (20), die auf der internen Oberfläche (22) der Hülse (2) aufliegt und die eine Laufkehle (23) für die Kugeln (18) einer der Kugelreihen besitzt; je einem Rohrstutzen (4, 4') an jedem Ende der Hülse (2); einem im Inneren dieses Stutzens angebrachten und gegen axiale Verschiebung in diesem Stutzen gesicherten, drehbaren Anschlagelement aus einer Rohrmuffe (32), die aus zwei einander gegenüberliegenden Halbmuffen (34, 34') mit einem Innendurchmesser $\varnothing_2$ gleich dem Innendurchmesser $\varnothing_1$ der Hülse ist, mit radial nach innen gerichteten und auf jeder Halbmuffe angeordneten Verankerungszähnen und mit Rasten an jeder Schiene, in die diese Zähne eingreifen, dadurch gekennzeichnet, daß die Verbindungsebene P' der beiden Halbmuffen (34, 34') senkrecht zur Mittelebene P des mittleren Flachbandes (8) liegt, daß die Verankerungszähne durch Umbördeln (40, 40') aus den Rändern gegenüber den Halbmuffen hergestellt sind, und daß die Rasten (44), in die die Zähne (40, 40') eingreifen, auf beiden Seiten der Schiene (20, 20') so angeordnet sind, daß diese an die Muffe gekuppelt wird, wobei der Abstand, der zwischen den umgebördelten Zähnen der Muffe und dem mittleren Flachband bestehen bleibt, so groß ist, daß die Kugelkäfige im Inneren der Muffe frei durchlaufen können.

2. Vorrichtung gemäß Patentanspruch 1, dadurch gekennzeichnet, daß zwei Metallschienen (20, 20') vorhanden sind, wobei die Kugeln (18') der zweiten Kugelreihe in einer Bahnkehle (23') rollen, die in der zweiten Schiene (20') hergestellt ist, wobei diese auch auf der inneren Oberfläche (22) der Hülse (2) aufliegt; daß jede Halbmuffe (34, 34') auf beiden Rändern umgebördelte Zähne (40, 40') besitzt, die die beiden Schienen (20, 20') in der gleichen Muffe (32) halten; und daß der Abstand, der zwischen den umgebördelten Zähnen und dem mittleren Flachband besteht, ausreicht, um auf beiden Seiten des mittleren Flachbandes zwei Kugelkäfige im Inneren der Muffe frei hindurchtreten zu lassen.

3. Vorrichtung gemäß Patentanspruch 2, dadurch gekennzeichnet, daß an einem der beiden Enden eine der beiden Schienen in der Verankerung zwischen den umgebördelten Zähnen der Muffe und den Rasten der Schiene ein Längsspiel vorgesehen ist, während die drei übrigen Enden der Schienen in den Muffen ohne Längsspiel verankert sind.

4. Vorrichtung gemäß Patentanspruch 1, dadurch gekennzeichnet, daß sie aus einer einzigen Metallschiene (20) besteht, die eine Laufkehle (23) nur für die Kugeln (18) der ersten der Kugelreihen besitzt, daß die Kugeln (18') der zweiten Kugelreihe direkt auf der inneren Oberfläche der Hülse (2) laufen; daß die Hülse (2) eine glatte innere Oberfläche besitzt, die als Laufbahn für die Kugeln (18') verwendet werden kann; und daß jede Halbmuffe (34, 34') nur auf jeweils einem Rand umgebördelte Zähne (40, 40') zur Verankerung der einzigen Schiene (20) besitzt, während der andere Rand jeweils glatt ist und auf dem gegenüberliegenden glatten Rand der anderen Halbmuffe aufliegt.

FIG_1

FIG_2

FIG_3

FIG_4

FIG.5

FIG.6

EP 0 207 824 B1

FIG_7

FIG.8